# EUROPEAN PATENT SPECIFICATION

(11) **EP 2 797 844 B1**
(45) Date of publication and mention of the grant of the patent: **19.10.2016**
(21) Application number: 12824751.7
(22) Date of filing: 28.12.2012
(51) Int. Cl.: C02F 1/467, C02F 1/76, A61L 2/18, C02F 103/02, C02F 103/42

(54) **PROCESS AND COMBINED PLANT OF PRODUCTION OF CHLORINE DIOXIDE FOR WATER TREATMENT THROUGH DESINFECTION**
VERFAHREN UND KOMBINATIONSANLAGE ZUR HERSTELLUNG VON CHLORDIOXID ZUR WASSERBEHANDLUNG DURCH DESINFEKTION
PROCÉDÉ ET INSTALLATION COMBINÉE DE PRODUCTION DE DIOXYDE DE CHLORE POUR TRAITEMENT DE L'EAU PAR DÉSINFECTION

(30) Priority: 30.12.2011 IT RM20110698
(43) Date of publication of application: 05.11.2014
(73) Proprietor: Grundfos Holding A/S, 8850 Bjerringbro (DK)
(72) Inventor: BASO, Francesco, 30175 Marghera (VE) (IT)
(74) Representative: Santi, Filippo
(86) International application number: PCT/IT2012/000404
(87) International publication number: WO 2013/098867

(56) References cited:
- FR-A1- 2 855 167

## Description

The present invention relates to a process and a combined plant of production of chlorine dioxide for water treatment through disinfection.

More specifically, the invention relates to a process and a plant of the above kind, designed for the installation on water treatment plants through disinfection with electro-chlorinator.

As is well known, the water treatment is carried out using mainly two oxidants: sodium hypochlorite and chlorine dioxide.

Sodium hypochlorite (hereinafter sometimes also called more simply hypochlorite) is one of the most widely used chemical disinfectants. Since long appreciated for its low toxicity, deodorizing power, long-term effect, ease of transport and storage, this powerful germicide has proved to be ideal for applications of various kinds, from normal household of every day (for laundry and cleaning of the house in general) up to the large industrial applications between which:
- controlling the growth of bacteria and algae,
- sterilising drinking water,
- disinfecting sewage wastewater,
- eliminating biofouling in industrial cooling water,
- treating industrial waste, and
- disinfecting swimming pools.

Today the world chemical industry produces annually more than 40 million tons of chlorine gas, of which about 0,5% is used for the elimination of fouling in cooling systems in industries for the production of electricity.

Recently, the use of chlorine for the elimination of biofouling in water cooling equipment of plants for the production of electrical energy is more and more increasing all over the world.

Hypochlorite is preferred in cooling systems of the capacitors for the following reasons:
- effectively eliminates the fouling even at low concentrations,
- is available at reasonably low cost,
- plants for its production are available at reasonable prices,
- production plants require a very low maintenance,
- non-production periods of the plants are relatively short.

In particular, in industrial applications, which require large amounts of sodium hypochlorite, particular utility covers the production of hypochlorite on site, which eliminates the need for costly and dangerous transportation and storages of chlorine in cylinders.

One of the known techniques for the production of hypochlorite on site is the generation by processes of electrochlorination, through the use of a device called electro-chlorinator (capable of treating both salt water and also, after the addition of brine, fresh water). According to this technology, hypochlorite is produced in a diluted form (solution with concentration of 1-2g/l), is harmless and especially is produced in quantities that can be varied according to need.

In fact, when chlorine is dissolved in water, hypochlorite and hydrochloric acid are generated. Given that hypochlorite is unstable in acid, it decomposes rapidly. In electrolytic cells, the caustic soda produced in slight excess stabilises hypochlorite, which decomposes mainly in contact with the bacteria, hence sterilizing water.

During sterilization, hypochlorite releases oxygen (the true sterilizing agent), and consequently returns to be sodium chloride. Similarly, the effect of ultraviolet rays, temperature, and the presence of transition metal ions make so that the residual hypochlorite decomposes, avoiding the presence of toxic residues in the treated water.

This technique presents some drawbacks both from the point of view of the plant and from the point of view of water disinfection.

The first disadvantage is the cost related to the consumption of electrical energy: the generation process involves the use of a large amount of electrical energy, which increases as the electro-chlorinator is used and, for the reasons specified below, loses efficiency. As a result, this item covers a large portion of the operating costs.

The second drawback concerns the wear of the electrodes of the electro-chlorinator. In fact, the process of electrolysis consumes the electrodes which, being constituted by rods of graphite or titanium, must be periodically replaced, with considerable cost. Furthermore, the wear of the electrodes degradates the efficiency of the electro-chlorinator, so that, at the same consumption of electricity, the electro-chlorinator produces, as the electro-chlorinator is used, lesser and lesser hypochlorite (loss of efficiency which leads to the increase of consumption of electric energy referred to in the previous paragraph). The material that is eroded from the electrodes also leads to the formation of sludge which must be periodically removed.

The third drawback is constituted by the incrustations which are formed on the electrodes: these incrustations, due to the electrolysis process, reduces the efficiency of the electro-chlorinator and must be periodically removed by washing with hydrochloric acid, thus forcing to a temporary stop of the electro-chlorinator.

The fourth disadvantage resides in the efficacy of water treatment by means of hypochlorite: hypochlorite does not appear to be very effective with water with a relevant organic component; in these conditions, in fact, the formation of trihalomethanes, chloramines, bromates and other harmful substances for man is favored. In addition, following prolonged and repeated treatments, some algae, fungi and microorganisms develop resistance to hypochlorite.

The second oxidant used for water treatment is chlorine dioxide (hereinafter also called more simply dioxide), which constitutes an interesting alternative to chlorine thanks to the different composition.

The chlorine dioxide does not produce, in contact with the contaminants most frequently present in the water, organic chlorine compounds. The compounds resulting from the reaction between chlorine dioxide and organic compounds present in the water are therefore more significant from the point of view of quantity, perception and toxicity.

This makes chlorine dioxide the ideal disinfectant for drinking water treatment. Chlorine dioxide as a chemical agent has several advantages:
- insensitivity to the pH value of the treated water,
- no reaction with nitrogen compounds to form chlorine amines,
- 2,5 times greater oxidizing power than chlorine,
- bactericidal activity at low doses,
- absence of formation of halomethane compounds;
- mainly oxidant and non chlorinating disinfection action.

The great difinfection capacity of chlorine dioxide is not even linked to factors dependent on contact time or on the values of concentration (practical aspects that have always restricted the use of derivatives of chlorine as a disinfectant), because its oxidizing action, also at low dosages, begins immediately upon contact and non-selectively both on the microbial load present on both the organic material dissolved and suspended in water, the whole chlorine dioxide resulting available to disinfection, without undergoing any influence resulting from the value of pH present. Chlorine dioxide, in fact, acts with the same oxidation force both in acidic and basic conditions, unlike, for example, sodium hypochlorite, the activity of which is very much influenced by the environment in which it operates, being reduced down to about 50% in tendentially basic water.

Chlorine dioxide is also very effective in the control of the biofilm, a layer of organic material that is deposited on the surfaces of the pipes and which promotes the proliferation of diseases such as legionella, in addition to reducing the performance of the heat exchangers in the industrial field.

Chlorine dioxide is not stable enough to be produced off-site and then transported to the place of use, must then be produced directly on site, i.e. on the site of use, which requires the use of a special generator. The most convenient type of generator depends primarily on the nature of the reagents used, and these vary depending on applications.

According to the prior art, two different processes for the generation of chlorine dioxide provide respectively for the formation of chlorine dioxide from sodium chlorite and acid or the formation of chlorine dioxide from hypochlorite, sodium chlorite and acid.

The first of these processes makes use of a solution of sodium chlorite (typically in varying concentrations in the range of 12%-31%) and an acidic solution (typically hydrochloric acid in the range of 15-33%), that are dosed in a submerged reaction chamber.

Sodium chlorite reacts with hydrochloric acid according to the following reaction:

5 NaClO₂ + 4 HCl --> 4 ClO₂ + 5 NaCl + 2 H₂O (a)

The reaction between sodium chlorite and hydrochloric acid takes place with an excess of acid with respect to the stoichiometric value, thus increasing the efficiency of the reaction.

The reaction chamber is of limited size and guarantees the presence of dioxide only inside the water to be treated. In this way, the dioxide is generated and immediately diluted, thus eliminating the danger.

The main disadvantage of this technique is the cost of sodium chlorite, the price of which is usually high.

The process of production of chlorine dioxide from sodium hypochlorite, sodium chlorite and acid, instead, uses a solution of sodium chlorite (typically at 25%), a solution of sodium hypochlorite (typically at 12%) and a solution of acid (typically hydrochloric acid at 15-25%) and generates dioxide by means of a continuous reaction in two stages.

In the first stage sodium hypochlorite reacts with hydrochloric acid to produce chlorine on site according to the reaction:

NaOCl + 2HCl ---> Cl₂ + NaCl + H₂O (b)

The following reaction takes place between sodium chlorite and chlorine produced on site in the first stage, in accordance with the reaction:

2NaClO₂ + Cl₂ ---> 2ClO₂ + 2NaCl (c)

The reaction between sodium chlorite and chlorine produced on site is carried out in excess of chlorine. In fact, adding chlorine in excess of the stoichiometric amount allows to lower the pH of the process and to increase the efficiency of the reaction. The excess of chlorine, which must be considered at least equal to 10% of the required stoichiometric chlorine, remains in the generator as unreacted chlorine.

A disadvantage of this technique, compared to those previously illustrated, is the need for a storage room of a significant size and of a dosing system dedicated to sodium hypochlorite (in addition to those needed for acid and sodium chlorite) with consequent additional costs.

Another disadvantage is the cost of procurement of hypochlorite.

To solve these problems, FR2855167 proposed an apparatus which makes it possible to generate chlorine dioxide using the hypochlorite produced by an electro-chlorinator, doing so by combining the benefits of the treatment by chlorine dioxide with a reduction in the time of exercise of the electro-chlorinator and consequently in maintenance costs.

The apparatus according to this patent consists of a storage room of hydrochloric acid with corresponding dosing system, a storage room of sodium chlorite with corresponding dosing system, an electro-chlorinator for the production of sodium hypochlorite with corresponding dosing system and a reaction chamber in which above described reactions (b) and (c) take place.

A disadvantage of this apparatus is that, in case of maintenance of one of its parts, it is necessary to stop the treatment of water, because the reaction chamber produces chlorine dioxide using all three chemical reagents (sodium chlorite, sodium hypochlorite and hydrochloric acid) and there is no other way for dosing a disinfectant except through said reaction chamber.

As already described previously, the electro-chlorinator requires a periodic maintenance that, although by such a process the period between a maintenance intervention and another would be lengthened, can not be eliminated.

With the method according to that patent, moreover, additional equipment is introduced that require maintenance and periodic review: the systems of dosage of acid and sodium chlorite and the reaction chamber for the production of chlorine dioxide.

In the event that it is necessary to perform routine or extraordinary maintenance to only one of the components of the above procedure, it is therefore necessary to discontinue the water disinfection treatment.

In light of the above, it appears evident the need to have a process and a plant that allow to take advantage of the benefits arising from the on site production of chlorine dioxide starting from sodium hypochlorite, sodium chlorite and acid, overcoming the typical disadvantages of this technique, in particular relating to the additional costs, compared to the technique of production of chlorine dioxide from sodium chlorite and acid, due to the supply and storage of hypochlorite, as well as able to overcome the limitations due to the periodical production interruptions that are typical of the procedure and the plant described in patent FR2855167.

In this context it is included the solution according to the present invention, with the aim of providing a process and a plant that form an improvement in water treatment using chlorine dioxide, increasing the disinfecting power, reducing operating costs and allowing a maintenance that does not interrupt the disinfection treatment.

These and other results are obtained according to the present invention proposing a process and a combined plant of production of chlorine dioxide which allow to convert the installations in which there is already an electrochlorination system for the production of sodium hypochlorite for the treatment of water, exploiting the hypochlorite generated by the electrochlorination system as a reagent, along with sodium chlorite and acid, in the production of chlorine dioxide.

The purpose of the present invention is therefore to propose a process and a plant which allow to overcome the limits of the solutions according to the prior art and to obtain the technical results previously described.

The present invention therefore aims at improving the treatment of water in installations in which use is provided of hypochlorite generated by electro-chlorinator, increasing its disinfectant power and reducing operating costs.

Another object of this invention is to obtain the above said reusing the electro-chlorinator already present in the installation in a new system of treatment.

Further object of the present invention is to decrease the hours of operation of the electro-chlorinator necessary to treat the same daily quantity of water.

An additional object of the present invention is to guarantee a certain capacity of treatment of the plant even during maintenance of a part of the disinfection system.

Further object of the invention is that said method and said system can be implemented with substantially limited costs, both as regards the costs of production and as regards the costs of management.

Another object of the invention is to enable maintenance of the equipment described in the present invention without having to interrupt the water disinfection treatment.

Another object of the invention is to propose a process and a plant that are substantially simple, safe and reliable.

It is therefore a first specific object of the present invention a process of production of chlorine dioxide comprising the following steps:
- producing sodium hypochlorite by electro-chlorination,
- producing chlorine from an acid and sodium hypochlorite obtained through the preceding step,
- producing chlorine dioxide from sodium chlorite and chlorine obtained through the preceding step, according to the reaction

   2NaClO₂ + Cl₂ ---> 2ClO₂ + 2NaCl (c)

Preferably, according to the invention, said acid which reacts with sodium hypochlorite to give chlorine is hydrochloric acid, according to the reaction:

NaOCl + 2HCl ---> Cl₂ + NaCl + H₂O (b)

It is further a second specific object of the present invention a water treatment combined plant, comprising at least one electro-chlorinator for producing sodium hypochlorite in solution, a first reaction chamber to which sodium hypochlorite coming from said electro-chlorinator and an acid solution coming from a first storage tank and dosed by means of a first dosing section arrive and from which a chlorine solution comes out, a second reaction chamber to which said chlorine solution coming from said first reaction chamber and a sodium chlorite solution arrive, coming from a second storage tank and dosed by means of a second dosing section and from which a chlorine solution dioxide comes out and an injection point of said chlorine solution dioxide in a water treatment section.

According to the invention, said water treatment combined plant comprises a valve for opening and closing a linking conduct between said electro-chlorinator and said first reaction chamber and a valve for opening and closing a linking conduct between said electro-chlorinator and a further injection point in a water treatment section.

According to the invention, said water treatment combined plant comprises means for detecting pH respectively positioned at the exit of said first reaction chamber and of said second reaction chamber.

Preferably, according to the invention, said water treatment combined plant comprises a linking conduct of said first storage tank, through said first dosing section, and said second reaction chamber, said conduct being provided with a valve for opening and closing, and additionally a valve for opening and closing a linking conduct between said first reaction chamber and said second reaction chamber.

It is evident the effectiveness of the procedure and plant of the present invention, which allow to limit the costs due to the supply and to the storage of sodium hypochlorite, producing it directly on site. Buying it, in fact, costs more than producin it on-site with an electro-chlorinator.

The saving is mainly given by the lower consumption of the anodes, which normally in electro-chlorinators are changed every two years and cost millions of dollars, and which, by converting the hypochlorite to chlorine dioxide, may be changed even after five years, taking into account that the dosage may be of some hours per day instead of 24 hours, with consequent high savings.

A further advantage is that whereas the process and the plant according to the present invention are specifically suited to the application of old groups of electro-chlorinators (normally redundant) whose efficiency is reduced so much as to cause a low production of hypochlorite, no longer sufficient to direct treatment of the water (but still sufficient for conversion to an effective amount of chlorine dioxide) thus avoiding the replacement of electro-chlorinators and the consequent high costs.

The present invention will be now described, for illustrative but not limitative purposes, according to its preferred embodiment, with particular reference to the figures of the accompanying drawings, in which:

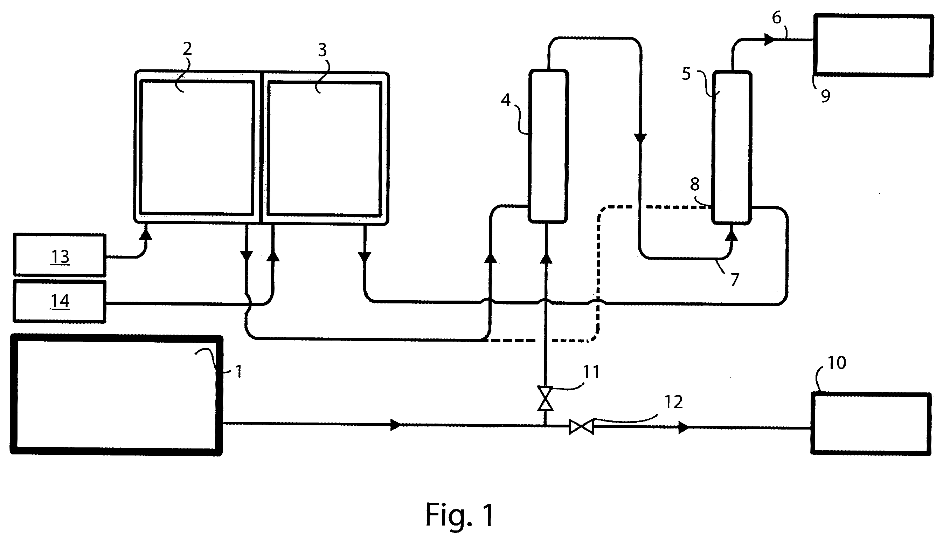

- Figure 1 shows a block diagram of a system according to the present invention.

With reference to Figure 1, according to the present invention, to increase the capacity of disinfection, it is expected to use the hypochlorite produced by an electro-chlorinator in a process and a plant for the generation of chlorine dioxide by reaction of the same hypochlorite with sodium chlorite and an acid, in two separate stages, namely by adding to the electro-chlorinator a dosing system of two other reagents, an acidifying solution and a solution of sodium chlorite, and two reactors. As described above, in fact, the chlorine dioxide is much more effective in water treatment than sodium hypochlorite.

In particular, the system of the present invention provides for conveying all the solution of hypochlorite from an electro-chlorinator 1 already existing in a first reaction chamber 4, suitably dimensioned, wherein hypochlorite of the solution is converted into chlorine by the action of an acidifying solution, coming from the storage tank 13 and dosed by means of the dosing section 2, according to the reaction (b):

NaOCl + 2HCl ---> Cl₂ + NaCl + H₂O (b)

The resulting chlorine solution is then sent to a second reaction chamber 5, also suitably dimensioned, wherein the second reaction (c) takes place:

2NaClO₂ + Cl₂ ----> 2ClO₂ + 2NaCl (c)

chlorine is oxidized to chlorine dioxide from sodium chlorite, coming from the storage tank 14 and dosed by means of the dosing section 3.

The control on the two reactions takes place by means of the detection of the pH value at the exit of the corresponding reaction chamber, respectively, through a pH meter 6 at the exit of the second reaction chamber 5 and a pH meter 7 at the exit of the first reaction chamber 4.

The product obtained is then sent to a water treatment section through a first injection point 9.

Through a series of ducts whose opening and closing is regulated by valves, the plant shown in Figure 1 can operate in three different configurations, as will be shown in the following of the present description.

In particular, according to the configuration just described, the valve 11, for opening and closing of the passage in the duct that connects the electro-chlorinator 1 with the first reaction chamber 4, is open, while the valve 12 for opening and closing of the passage in the duct that connects the electro-chlorinator 1 with the water treatment section through a second injection point 10 is closed. As already seen, according to this configuration, chlorine dioxide is sent to the water treatment from the point of injection 9.

According to the invention, the second reaction chamber 5, as shown in Figure 1, can be equipped with an input 8, through which it is possible to dose the acidifying solution directly into the second reaction chamber 5, in order to use this chamber as dioxide generator, using a reaction acid-sodium chlorite, preferably the reaction (a):

5 NaClO₂ + 4 HCl --> 4 ClO₂ + 5 NaCl + 2 H₂O (a)

In this way, with the same system, it is possible to generate chlorine dioxide with a 2-component or 3-component system.

In the plant according to the present invention, therefore, three modes of treatment are possible:
1. treatment with hypochlorite generated by the electro-chlorinator (already existing treatment);
2. treatment with chlorine dioxide generated by hypochlorite coming from the electro-chlorinator, acidifying solution and sodium chlorite;
3. treatment with chlorine dioxide generated from acidifying solution and sodium chlorite.

The two modes of treatment with chlorine dioxide are possible because of the integration of an existing treatment plant with hypochlorite generated by electro-chlorinator with the two reaction chambers 4 and 5.

According to the invention, the treatment with chlorine dioxide generated from hypochlorite coming from the electro-chlorinator, acidifying solution and sodium chlorite is what is used in normal operation, while treatment with chlorine dioxide generated by acidifying solution and sodium chlorite can be used to treat the water with the chlorine dioxide even in the case of maintenance of the electro-chlorinator. The treatment with hypochlorite generated from the electro-chlorinator, already existing, is used to treat the water, through the injection point, in the case where the system added to it (chambers of reactions 4 and 5, dosers 2 and 3) require maintenance.

Using, then, an additional injection point and a reaction chamber, suitably dimensioned and arranged for the dosage of only sodium chlorite, or alternatively prepared for the dosage of sodium chlorite and acidifying solution, it is possible to continue the disinfection treatment also during maintenance phases of part of the system described in the present invention.

### Example.

A plant which used sea water as cooling water and that must treat a flow of 100000 m³/h of seawater for a total of 2400000 m³ per day was modified according to the present invention. Before being changed, this system effected the water treatment by means of an electro-chlorinator and a typical treatment according to this system was constituted by a continuous dosage of 0,8 g/m³ of hypochlorite for 22 hours and by one shot of 3 g/m³ of the duration of 2 hours during the day: in these conditions the daily consumption of hypochlorite was 2360 kg with a consumption of electrical energy by the electro-chlorinator equal to 9,5 MWh (4 kWh per kg of produced hypochlorite). The average life of the electrodes of the electro-chlorinator was 3-5 years, cleaning the electrodes had to be carried out once every three months and sludge removal twice a year.

By making the change according to the present invention to the plant, that is grouping the electro-chlorinator with two reaction chambers for the conduction of the two reaction steps typical of a process of production of chlorine dioxide from sodium hypochlorite, sodium chlorite and an acid, for ensuring a result analogous to the preceding, the daily treatment of the cooling water was carried out in 5 shots of 0,4 g/m³ of chlorine dioxide of 30 min (for a total duration of 2,5 hours). During this treatment 40 kg/h of chlorine dioxide were produced, which to be generated, according to the present invention, needed 40 kg/h of hypochlorite, 200 kg/h of acid and 220 kg/h of sodium chlorite. In this situation the daily consumption of hypochlorite was 100 kg and the consumption of electricity was 0,4 MWh. In summary, it was possible to verify a reduction of 96% of the consumption of electrical energy and also of maintenance. In fact, thanks to the realised changes the average life of the electrodes has greatly lengthened and the production of scale and sludge is decreased.

Considering also fuel consumption, maintenance and the costs of the modifications of the plant, with the present invention it was verified the possibility of an annual reduction of costs by approximately 15% compared to operation with only the electro-chlorinator.

In conclusion, according to the present invention, hypochlorite is converted to chlorine dioxide, an oxidant with greater capacity of disinfection than hypochlorite, thus pursuing the first of the predefined objects.

According to the present invention, furthermore, it is also pursued the second purpose, the electro-chlorinator being incorporated in the new disinfection plant, preserving the investment made.

Additionally, due to the greater efficiency of the dioxide compared to hypochlorite, the water treatment, which with hypochlorite is usually operated continuously 24 hours per day, has a shorter duration (from 2 to 4 hours per day). Thus, for equal results in disinfection, it has a large decrease of operating costs, especially relatively to electricity and maintenance requests (less wear and therefore less frequent replacement of the electrodes of the electro-chlorinator, minor encrustation, sludge removal less frequent, etc ...). Such savings would allow to amortise in a short time the costs addressed to modify the electrochlorination plant in agreement with the proposed solution according to the present invention.

For these reasons, the invention has proven particularly convenient for the modernization of all plants of water treatment involving the use of hypochlorite obtained by electro-chlorinator as disinfectant. In particular, it is convenient in those plants in which there are groups of old electro-chlorinator, no longer able to guarantee a satisfactory treatment alone, but which, inserted in the plant according to the present invention can still be effective, thereby avoiding disposal.

The configuration according to the preferred embodiment of the present invention, shown with reference to Figure 1, allows three modes of operation, that guarantee a continuity of treatment to the end user even in case there is a need for a service of the electro-chlorinator or system added to it.

The system described in the invention is cheaper than a new one that generates chlorine dioxide from the reagents sodium hypochlorite, sodium chlorite and acid because it saves the investment needed for the storage and the dose of hypochlorite and eliminates the costs of provision of the same hypochlorite.

Similarly to what said above, the system described in the invention is cheaper than a new one which generates chlorine dioxide by the pair acid-sodium chlorite . In fact, even if the part of the plant to be added is the same, however, it saves about 20% on the consumption of sodium chlorite (the most expensive reagent). In practice, the storage of sodium chlorite is smaller, since it is consumed in lower quantities.

The present invention has been described for illustrative but not limitative purposes, according to its preferred embodiments, but it is to be understood that variations and/or modifications can be made by those skilled in the art without departing from the relevant scope of protection, as defined by the enclosed claims.

## Claims

1. Water treatment combined plant, **characterised in that** it comprises at least one electro-chlorinator (1) for producing sodium hypochlorite in solution, a first reaction chamber (4) to which sodium hypochlorite coming from said electro-chlorinator (1) and a hydrochloric acid solution coming from a first storage tank (13) and dosed by means of a first dosing section (2) arrive and from which a chlorine solution comes out, a second reaction chamber (5) to which said chlorine solution coming from said first reaction chamber (4) and a sodium chlorite solution arrive, coming from a second storage tank (14) and dosed by means of a second dosing section (3) and from which a chlorine dioxide solution comes out and an injection point (9) of said chlorine dioxide solution in a water treatment section, a valve (11) for opening and closing a linking conduct between said electro-chlorinator (1) and said first reaction chamber (4) and a valve (12) for opening and closing a linking conduct between said electro-chlorinator (1) and a further injection point (10) in a water treatment section, and provided with means that, when said valve (11) for opening and closing said linking conduct between said electro-chlorinator (1) and said first reaction chamber (4) is closed or said electro-chlorinator (1) is not operating, are apted to connect at least one of said reaction chambers (4 and 5) directly with both said first storage tank (13) and said first dosing section (2) and with said second storage tank (14) and said second dosing section (3) and from which chlorine dioxide comes out, means for detecting pH (7, 6) being respectively positioned at the exit of said first reaction chamber (4) and of said second reaction chamber (5).

2. Water treatment combined plant according to claim 1, **characterised in that** it comprises a linking conduct of said first storage tank (13), through said first dosing section (2), and said second reaction chamber (5), said conduct being provided with a valve for opening and closing, and additionally a valve for opening and closing a linking conduct between said first reaction chamber (4) and said second reaction chamber (5).

3. Process of production of chlorine dioxide with a water treatment combined plant according to claims 1-2, said process comprising the following steps:
- providing for an electro-chlorination section, a hydrochloric acid storing section, a sodium chlorite storing section, a first reaction chamber (4) and a second reaction chamber (5);
- providing both said first reaction chamber (4) and said second reaction chamber (5) with means for detecting pH positioned at the respective exit;
and alternatively,
when said electro-chlorination section is operating:
- producing sodium hypochlorite by electro-chlorination,
- in said first reaction chamber (4), producing chlorine from hydrochloric acid coming from said hydrochloric acid storing section and sodium hypochlorite obtained through the preceding step, according to the reaction
NaOCl + 2HCl -> Cl₂ + NaCl + H₂O (b)
- in said second reaction chamber (5), producing chlorine dioxide from sodium chlorite and chlorine obtained through the preceding step, according to the reaction
2NaClO₂ + Cl₂ --> 2ClO₂ + 2NaCl (c)
or, when said electro-chlorination is not operating:
- either in said first reaction chamber (4) or in said second reaction chamber (5), producing chlorine dioxide from hydrochloric acid coming from said hydrochloric acid storing section and sodium chlorite coming from sodium chlorite storing section, according to the reaction
5 NaClO₂ + 4 HCl -> 4 ClO₂ + 5 NaCl + 2 H₂O (a);
and
both when said electro-chlorination is operating and when said electro-chlorination is not operating,
- controlling the reaction inside both said first reaction chamber (4) and said second reaction chamber (5) by means of said means for detecting pH.

## Patentansprüche

1. Wasserbehandlungs-Kombinationsanlage, **dadurch gekennzeichnet, dass** sie mindestens einen Elektro-Chlorinator (1) zur Herstellung von Natriumhypochlorit in Lösung, eine erste Reaktionskammer (4), zu der Natriumhypochlorit, das von dem Elektro-Chlorinator (1) kommt, und eine Salzsäurelösung, die von einem ersten Speichertank (13) kommt und mittels eines ersten Dosierbereichs (2) dosiert wird, gelangen und aus der eine Chlorlösung austritt, eine zweite Reaktionskammer (5), zu der die Chlorlösung, die von der ersten Reaktionskammer (4) kommt, und eine Natriumhypochloritlösung, die von einem zweiten Speichertank (14) kommt und mittels eines zweiten Dosierbereichs (3) dosiert wird, gelangen und aus der eine Chlordioxidlösung austritt, und einen Injektionspunkt (9) für die Chlordioxidlösung in einem Wasserbehandlungsbereich, ein Ventil (11) zum Öffnen und Schließen einer Verbindungsleitung zwischen dem Elektro-Chlorinator (1) und der ersten Reaktionskammer (4) und ein Ventil (12) zum Öffnen und Schließen einer Verbindungsleitung zwischen dem Elektro-Chlorinator (1) und einem weiteren Injektionspunkt (10) in einem Wasserbehandlungsbereich, und mit Mitteln versehen ist, welche, wenn das Ventil (11) zum Öffnen und Schließen der Verbindungsleitung zwischen dem Elektro-Chlorinator (1) und der ersten Reaktionskammer (4) geschlossen ist oder der Elektro-Chlorinator (1) nicht in Betrieb ist, dazu eingerichtet sind, um mindestens eine der Reaktionskammern (4 und 5) direkt mit sowohl dem ersten Speichertank (13) und dem ersten Dosierbereich (2) als auch mit dem zweiten Speichertank (14) und dem zweiten Dosierbereich (3) zu verbinden, und woraus Chlordioxid austritt, Mittel zur Bestimmung des pH-Werts (7,6), die jeweils am Ausgang der ersten Reaktionskammer (4) und der zweiten Reaktionskammer (5) positioniert sind, umfasst.

2. Wasserbehandlungs-Kombinationsanlage nach Anspruch 1, **dadurch gekennzeichnet, dass** sie eine Verbindungsleitung des ersten Speichertanks (13) durch den ersten Dosierungsbereich (2) zu der zweiten Reaktionskammer (5), wobei die Leitung mit einem Ventil zum Öffnen und Schließen versehen ist, und zusätzlich ein Ventil zum Öffnen und Schließen einer Verbindungsleitung zwischen der ersten Reaktionskammer (4) und der zweiten Reaktionskammer (5) umfasst.

3. Verfahren zur Herstellung von Chlordioxid mit einer Wasserbehandlungs-Kombinationsanlage nach den Ansprüchen 1-2, wobei das Verfahren die folgenden Schritte umfasst:
- Bereitstellen eines Elektro-Chlorierungsbereichs, eines Salzsäure-Speicherbereichs, eines Natriumchlorit-Speicherbereichs, einer ersten Reaktionskammer (4) und einer zweiten Reaktionskammer (5);
- Versehen sowohl der ersten Reaktionskammer (4) als auch der zweiten Reaktionskammer (5) mit Mitteln zur Bestimmung des pH-Werts, die am jeweiligen Ausgang positioniert sind;
und alternativ,
wenn der Elektro-Chlorierungsbereich in Betrieb ist:
- Herstellen von Natriumhypochlorit durch Elektro-Chlorierung,
- Herstellen von Chlor aus Salzsäure, die von dem Salzsäurespeicherbereich kommt, und Natriumhypochlorit, welches durch den vorangegangenen Schritt erhalten wurde, in der ersten Reaktionskammer (4) gemäß der Gleichung
NaOCl + 2 HCl → Cl₂ + NaCl + H₂O (b)
- Herstellen von Chlordioxid aus Natriumchlorit und Chlor, welches durch den vorangegangenen Schritt erhalten wurde, in der zweiten Reaktionskammer (5) gemäß der Gleichung
2 NaClO₂ + Cl₂ → 2 ClO₂ + 2 NaCl (c)
oder, wenn die Elektro-Chlorierung nicht in Betrieb ist:
- Herstellen von Chlordioxid aus Salzsäure, die von dem Salzsäure-Speicherbereich kommt, und Natriumchlorit, das von dem Natriumchlorit-Speicherbereich kommt, entweder in der ersten Reaktionskammer (4) oder in der zweiten Reaktionskammer (5) gemäß der Gleichung
5 NaClO₂ + 4 HCl → 4 ClO₂ + 5 NaCl + 2H₂O (a);
und
sowohl wenn die Elektro-Chlorierung in Betrieb ist als auch wenn die Elektro-Chlorierung nicht in Betrieb ist,
- Steuern der Reaktion innerhalb sowohl der ersten Reaktionskammer (4) als auch der zweiten Reaktionskammer (5) mit Hilfe der Mittel zur Bestimmung des pH-Werts.

## Revendications

1. Installation combinée de traitement des eaux, **caractérisée en ce qu'**elle comprend au moins un électro-chlorateur (1) servant à produire de l'hypochlorite de sodium en solution, une première chambre réactionnelle (4) dans laquelle l'hypochlorite de sodium provenant dudit électro-chlorateur (1) et une solution d'acide chlorhydrique provenant d'une première cuve de stockage (13) et dosée au moyen d'une première section de dosage (2) arrivent et de laquelle une solution de chlore sort, une seconde chambre réactionnelle (5) dans laquelle ladite solution de chlore provenant de ladite première chambre réactionnelle (4) et une solution de chlorite de sodium arrivent, provenant d'une seconde cuve de stockage (14) et dosée au moyen d'une seconde section de dosage (3) et de laquelle une solution de dioxyde de chlore sort et un point d'injection (9) de ladite solution de dioxyde de chlore dans une section de traitement des eaux, un valve (11) servant à ouvrir et fermer une conduite de liaison entre ledit électro-chlorateur (1) et ladite première chambre réactionnelle (4) et une valve (12) servant à ouvrir et fermer une conduite de liaison entre ledit électro-chlorateur (1) et un point d'injection (10) supplémentaire dans une section de traitement des eaux, et pourvue de moyens qui, quand ladite valve (11) servant à ouvrir et fermer ladite conduite de liaison entre ledit électro-chlorateur (1) et ladite première chambre réactionnelle (4) est fermée ou que ledit électro-chlorateur (1) n'est pas en fonctionnement, sont aptes à raccorder au moins une desdites chambres réactionnelles (4 et 5) directement à la fois avec ladite première cuve de stockage (13) et ladite première section de dosage (2) et avec ladite seconde cuve de stockage (14) et ladite seconde section de dosage (3) et de laquelle du dioxyde de chlore sort, des moyens servant à détecter le pH (7, 6) étant positionnés respectivement à la sortie de ladite première chambre réactionnelle (4) et de ladite seconde chambre réactionnelle (5).

2. Installation combinée de traitement des eaux selon la revendication 1, **caractérisée en ce qu'**elle comprend une conduite de liaison de ladite première cuve de stockage (13), à travers ladite première section de dosage (2), et ladite seconde chambre réactionnelle (5), ladite conduite étant pourvue d'une valve servant à ouvrir et fermer, et en outre une valve servant à ouvrir et fermer une conduite de liaison entre ladite première chambre réactionnelle (4) et ladite seconde chambre réactionnelle (5).

3. Procédé de production de dioxyde de chlore avec une installation combinée de traitement des eaux selon les revendications 1 à 2, ledit procédé comprenant les étapes suivantes :
- la fourniture pour une section d'électro-chloration, d'une section de stockage d'acide chlorhydrique, d'une section de stockage de chlorite de sodium, d'une première chambre réactionnelle (4) et d'une seconde chambre réactionnelle (5) ;
- la fourniture à la fois à ladite première chambre réactionnelle (4) et à ladite seconde chambre réactionnelle (5) de moyens servant à détecter le pH positionnés à la sortie respective ;
et en variante,
quand ladite section d'électro-chloration est en fonctionnement :
- la production d'hypochlorite de sodium par électro-chloration,
- dans ladite première chambre réactionnelle (4), la production de chlore à partir d'acide chlorhydrique provenant de ladite section de stockage d'acide chlorhydrique et d'hypochlorite de sodium obtenu dans l'étape précédente, selon la réaction
NaOCl + 2HCl -> Cl₂ + NaCl + H₂O (b)
- dans ladite seconde chambre réactionnelle (5), la production de dioxyde de chlore à partir du chlorite de de sodium et du chlore obtenus dans l'étape précédente, selon la réaction
2NaClO₂ + Cl₂ --> 2ClO₂ + 2NaCl (c)
ou, quand ladite électro-chloration n'est pas en fonctionnement :
- soit dans ladite première chambre réactionnelle (4), soit dans ladite seconde chambre réactionnelle (5), la production de dioxyde de chlore à partir de l'acide chlorhydrique provenant de ladite section de stockage d'acide chlorhydrique et du chlorite de sodium provenant de la section de stockage de chlorite de sodium, selon la réaction
5 NaClO₂ + 4 HCl -> 4 ClO₂ + 5 NaCl + 2 H₂O (a) ;
et
à la fois quand ladite électro-chloration est en fonctionnement et quand ladite électro-chloration n'est pas en fonctionnement,
- le contrôle de la réaction à la fois à l'intérieur de ladite première chambre réactionnelle (4) et de ladite seconde chambre réactionnelle (5) au moyen desdits moyens servant à détecter le pH.
